# EUROPEAN PATENT SPECIFICATION

(11) **EP 2 002 915 B1**
(45) Date of publication and mention of the grant of the patent: **12.10.2011**
(21) Application number: 07738718.1
(22) Date of filing: 15.03.2007
(51) Int. Cl.: B23K 3/00, B23K 1/19, B23K 1/00

(54) **METHOD OF FABRICATING DISSIMILAR MATERIAL JOINTED BODY**
VERFAHREN ZUR HERSTELLUNG EINES ZUSAMMENGEFÜGTEN KÖRPERS AUS UNTERSCHIEDLICHEM MATERIAL
PROCEDE DE FABRICATION D'UN CORPS EN SECTIONS DE MATERIAUX DISSEMBLABLES

(30) Priority: 15.03.2006 JP 2006071803
(43) Date of publication of application: 17.12.2008
(73) Proprietor: NGK Insulators, Ltd., Nagoya-shi, Aichi 467-8530 (JP)
(72) Inventor: TAKAHASHI, Hironori, Nagoya-shi, Aichi 467-8530 (JP); HIRONAGA, Masayuki, Nagoya-shi, Aichi 467-8530 (JP)
(74) Representative: Paget, Hugh Charles Edward
(86) International application number: PCT/JP2007/055268
(87) International publication number: WO 2007/119377

(56) References cited:
- GB-A- 1 310 815
- JP-A- 2002 001 526
- JP-A- 2006 051 682
- JP-B1- 47 023 967
- US-A- 3 752 382
- US-A1- 2006 034 972
- DATABASE WPI Week 197820 Thomson Scientific, London, GB; AN 1978-35729A XP002547817 -& JP 53 037561 A (MITSUBISHI HEAVY IND CO LTD) 6 April 1978 (1978-04-06)

## Description

The present invention relates to a method of producing a bonded body of different materials, according to the preamble of claim 1 (see, for example, US2006/0034972A1). More particularly, the present invention relates to a method for producing at low costs a bonded body of different materials having excellent bonding strength in the bonded interface.

### BACKGROUND ART

A bonded body obtained by laminating two plate members, each made of a material differing from the other, has been used for a member requiring wear resistance of only a part thereof, such as a die used for extrusion molding and the like (such a bonded body is hereinafter referred to as a bonded body of different materials) (see, for example, Patent Document 1 or 2).

Patent Document 1 discloses an aluminum metal bonded body prepared by bonding an aluminum metal member made of aluminum or containing aluminum as a major component and another member differing from the aluminum metal member, with a soft metal layer with Hv hardness (micro-Vickers hardness: load 100 gf) of 20 to 80 and a thickness of 0.1 to 3 mm being interposed between the aluminum metal member and the other member made of a different material.

Patent Document 2 discloses a metal-ceramic bonded body having a structure in which a metal body and a ceramic body are bonded with a brazing material layer interposed between them. Steel having properties of being hardened by cooling from its austenitic state at a predetermined cooling rate is used as the metal body. The steel and the brazing material are selected from the materials satisfying an inequality of 0.4 MPs<Ts<0.75 MPs, wherein MPs is the solidus temperature of the brazing material and Ts is the starting temperature of steel transformation from the austenitic state to a hardened phase formed when the steel is cooled at a cooling rate of 0.1 to 200°C/min.

When such a bonded body of different materials is produced, for example, a method where a laminate of two plate members made of different materials is prepared and the laminate is bonded by heating while holding the laminate between a pair of pressing dies can be used.

[Patent Document 1] JP-A-10-5992
[Patent Document 2] JP-A-2002-179473
US 2006/0034972A1 describes a die for forming a honeycomb structure, which is obtained by stacking a bonding two platelike members of different materials. One of the members is made of a metal material capable of causing at least one of the phase transformations of martensite transformation, bainite transformation and pearlite transformation by cooling of an austenite phase. The other of the members is made of a tungsten carbide-based super hard alloy containing at least tungsten carbide. The two members are stacked and bonded together in the heated state.
JP 47-23967B1 describes a pressing die for brazing, which has a tapering portion.
JP 53-37561A1 describes process of diffusion welding of large-sized particles, which are vertically stacked and placed between a pair of pressure plates and heated to above the recrystallisation point below the melting point of the material. Pressure is applied by a number of spaced pressure rods actuated by respective power cylinders. The pressure rods taper in the direction away from the stack.

### DISCLOSURE OF THE INVENTION

However, in a conventional method of producing a bonded body of different materials, since it has been difficult to uniformly heat the plate member sandwiched between a pair of pressing dies, the resulting laminated plate members may have fluctuation in the bonding strength in the laminated interface or may have incompletely bonded portions.

A method where a heater or the like is disposed around the plate members sandwiched between a pair of pressing dies to use radiant heat from the heater has been used. However, conventional dies used in production of a bonded body of different materials have only insufficient heat transfer rate and poor absorption efficiency of radiant heat, resulting in an increase in the energy cost during heating.

The present invention has been achieved in view of the aforementioned problems and provides a method for producing a bonded body of different materials having excellent bonding strength in the bonded interface at low costs.

That is, according to the present invention, there is provided a methods for producing a bonded body of different materials, as set out in claim 1.

Preferably the pressing dies are made of a material having a heat transfer coefficient (W/m²·K) 1.5 times or more higher than the heat transfer coefficient (W/m²·K) of both of the plate members constituting the plate-member-laminated-body.

Preferably the pressing dies are made of a material having a melting point of 500°C or more and 1.5 times or more higher than the bonding temperature of the plate-members constituting the plate-member-laminated-body.

Preferably the two plate members are laminated with a brazing material between them to obtain a plate-member-laminated-body with a brazing material between the two plate members.

Preferably the plate-member-laminated-body is held with a releasing material provided in advance between a pair of pressing dies and a plate-member-laminated-body.

The releasing material is preferably in a form of a sheet or a powder of at least one material selected from silicon, carbon, aluminum nitride, aluminum oxide, and silicon carbide.

Preferably the plate-member-laminated-body is held by a pressure of 0.1 to 100 MPa applied by the pressing dies.

Preferably the material of one of the plate members is provided with a back hole to introduce a forming raw material and slits for forming the forming raw material in a lattice shape, and the resulting bonded body of different materials is used as material for a die for forming a honeycomb structure.

The method of the present invention can produce a bonded body of different members having excellent bonding strength in the bonded interface of the bonded two plate members at low costs.

In particular, the method for producing a bonded body of different materials of the present invention can heat the pressing dies more promptly than the plate-membet-laminated-body during the heating step by using a pair of pressing dies prepared from the above-mentioned materials and having the above-mentioned configuration. In addition, since the heat can uniformly be transmitted to the plate-member-laminated-body from the heated pressing dies, the method can exhibit very high thermal efficiency.

### BRIEF DESCRIPTION OF THE DRAWINGS

Fig. 1 is a diagram schematically showing the process of producing the plate-member-laminated-body in one embodiment of the method for producing the bonded body of different materials of the present invention, wherein the plate-member-laminated-body is viewed from the side.
Fig. 2 is a side view of the bonded body of different materials obtained by one embodiment of the method for producing the bonded body of different materials of the present invention.
Fig. 3 is a diagram schematically showing the step of heating the plate-member-laminated-body held between a pair of pressing dies in one embodiment of the method for producing the bonded body of different materials of the present invention, wherein the plate-member-laminated-body is viewed from the side.
Fig. 4 is a diagram showing the heat transfer conditions during heating in one embodiment of the method for producing the bonded body of different materials of the present invention, wherein the plate-member-laminated-body is viewed from the side.
Fig. 5 is a diagram showing the heat transfer conditions during heating in one embodiment of the method for producing the bonded body of different materials of the present invention, wherein the plate-member-laminated-body is viewed from the side.
Fig. 6 is a diagram showing the heat transfer conditions during heating in one embodiment of the method for producing the bonded body of different materials of the present invention, wherein the plate-member-laminated-body is viewed from the side.
Fig. 7 is a diagram showing the process of producing the plate-member-laminated-body in a state in which a brazing material is disposed between the two plate members in one embodiment of the method for producing the bonded body of different materials of the present invention, wherein the plate-member-laminated-body is viewed from the side.
Fig. 8 is an oblique view schematically showing a die for forming a honeycomb structure.
Fig. 9 is an oblique view showing the honeycomb structure produced by extrusion forming using the die shown in Fig. 8.
Fig. 10 is a cross-sectional diagram vertical to the surface of the plate-member-laminated-body, schematically describing the process of producing the plate-member-laminated-body in another example of one embodiment of the method for producing the bonded body of different materials of the present invention.
Fig. 11 is a cross-sectional diagram vertical to the surface of the plate-member-laminated-body, schematically describing the step of heating the plate-member-laminated-body held between a pair of dies in another example of one embodiment of the method for producing the bonded body of different materials of the present invention.
Fig. 12 is a cross-sectional diagram vertical to the surface of the plate-member-laminated-body, schematically describing the step of forming slits in the other plate member in another example of one embodiment of the method for producing the bonded body of different materials of the present invention.

### EXPLANATION OF SYMBOLS

(1): bonded body of different materials, (2): plate member (one plate member), (3): plate member (other plate member), (4): plate-member-laminated-body, (5): pressing die, (6): tapered part, (7): heater, (8): releasing material, (9): brazing material, (10): radiant heat, (12): honeycomb structure, (13): partition wall, (14): cell, (15): holding surface, (16): fixed end, (21): die, (25): slit, (26): back hole

### BEST MODE FOR CARRYING OUT THE INVENTION

One embodiment of the bonded body of different materials according to the present invention is described below in detail with reference to the drawing. However, the present invention should not be construed as being limited to the following embodiment.

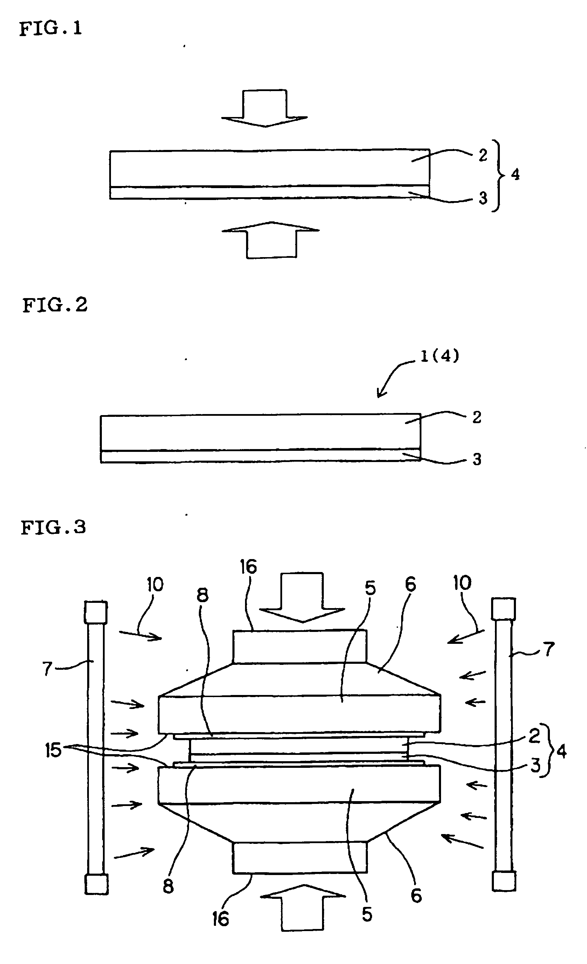

Fig. 1 is a diagram schematically describing the process for producing the plate-member-laminated-body in the method for producing a bonded body of different materials of the present embodiment, and Fig. 2 is a diagram schematically describing a bonded body of different materials obtained by the method for producing a bonded body of different materials of the present embodiment. Fig. 3 is a diagram schematically showing the step of heating the plate-member-laminated-body held between a pair of pressing dies in the method for producing a bonded body of the present embodiment. Figs. 1 to 3 are side views in which the plate-member-laminated-body or the bonded body of different materials is viewed from the side.

The method for producing a bonded body of different materials of the present embodiment comprises producing a plate-member-laminated-body (4) by laminating two plate members (2 and 3), each made of a different material as shown in Fig. 1, and heating the plate-member-laminated-body (4) to produce a bonded body of different materials (1) having the two plate members (2 and 3) bonded as shown in Fig. 2, wherein the method includes a step of heating the above-mention plate-member-laminated-body (4) held between a pair of pressing dies (5) as shown in Fig. 3.

In the method of producing a bonded body of different materials of the present embodiment, there is used a pressing die (5) made of a material having a heat transfer coefficient (W/m²·K) 1.5 times or more higher than that of at least one of the plate members (2 and 3) constituting the plate-member-laminated-body (4), the pressing die (5) having tapered parts (6) between holding surfaces (15) sandwiching the plate-member-laminated-body (4) and fixing ends (16) for securing the pressing die (5), wherein the outer diameter is reduced from the holding surfaces (15) toward the fixing ends (16) as shown in Fig. 3.

This constitution makes it possible to produce a bonded body of different materials (1) having excellent bonding strength in the interface of the two plate-members (2 and 3) (refer to Fig. 2) at low costs.

In a conventional method of producing a bonded body of different materials, the laminated plate members may have fluctuation in the bonding strength in the laminated interface of the two plate members or may have incompletely bonded portions due to difficulty in uniform heat transfer from outside to the plate members sandwiched between a pair of pressing dies. According to a method for producing a bonded body of different materials of the present embodiment, the plate-member-laminated-body (4) can uniformly and efficiently be heated by using a pressing die (5) which is made of a material having a heat transfer coefficient (W/m²·K) 1.5 times or more higher than that of at least one of the plate members (2 and 3) constituting the plate-member-laminated-body (4) and has a tapered part (6) where the outer diameter is reduced from the holding surface (15) toward the fixing end (16).

Thus, since a method of producing a bonded body of different materials of the embodiment can heat the pressing die (5) more promptly than heating the plate-member-laminated-body (4) during the heating step due to the use of the pressing die (5) prepared from the above-mentioned materials and having the above-mentioned configuration and can uniformly transfer heat to the plate-member-laminated-body (4) from the heated pressing die (5), the method can exhibit very high thermal efficiency.

Although not specifically limited, in a method for producing a bonded body of different materials of the present embodiment, the heat transfer coefficient (W/m²·K) of the material forming the pressing die (5) is preferably twice or more, more preferably three times or more, higher than that of at least one of the plate members.

In addition, it is preferable in a method for producing a bonded body of different materials of the present embodiment to use a material for the pressing die (5) having a heat transfer coefficient (W/m²·K) 1.5 times or more higher than the heat transfer coefficient (W/m²·K) of both of the plate members (2 and 3) forming the plate-member-laminated-body (4). This constitution makes it possible to produce a bonded body of different materials (1) having excellent bonding strength (refer to Fig. 2).

When the plate-member-laminated-body (4) is heated in a state that the plate-member-laminated-body (4) is sandwiched between a pair of pressing dies (5), the plate-member-laminated-body (4) can be heated by a heater (7) or the like disposed in the periphery of the pressing dies (5) sandwiching the plate-member-laminated-body (4) as shown in Fig. 3.

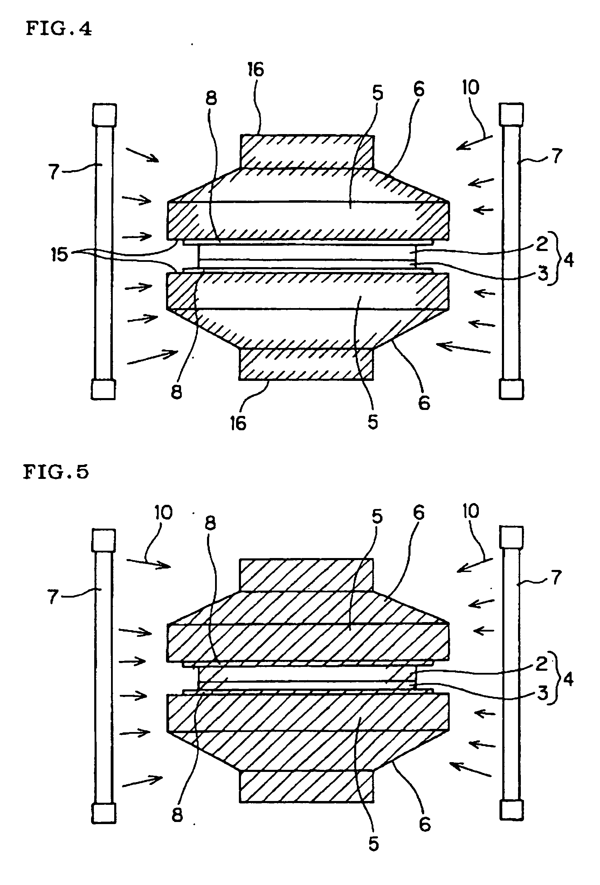

Now, details of the heat transfer during heating will be described below. Figs. 4 to 6 are diagrams showing the heat transfer conditions during heating in the present method for producing the bonded body of different materials of the present embodiment, wherein the bonded body of different materials is viewed from the side. In Figs. 4 to 6, the parts of the pressing dies and the plate-member-laminated-body marked with diagonal lines are the parts to which heat is transferred.

When heat is applied from a heater (7), the outside of the pressing dies (5) made of a material having high heat transfer properties is first heated by the radiant heat (10) from the heater (7) as shown in Fig. 4.

In addition, since a pressing die (5) having a tapered part (6) where the outer diameter is reduced from a holding surface (15) toward a fixing surface (16) between the holding surface (15) and the fixing surface (16) is used, the central part of the holding surface (15), to which heat is transferred only with difficulty if a common method is used, is heated well by heat transfer from the tapered part (6), whereby the holding surface (15) of the pressing die is uniformly heated.

Furthermore, the pressing die (5) having the above-mentioned configuration can be heated with excellent thermal efficiency due to the easy absorbing capability of the radiant heat (10).

When known pressing dies with a shape of a, for example, square pillar or a cylinder, for example, are used for holding a plate-member-laminated-body, it takes a long time until entire pressing dies are heated. If such pressing dies are used, it is impossible to uniformly heat the plate-member-laminated-body, since the plate-member-laminated-body is heated from the outside of the holding surface before the holding surface is uniformly heated.

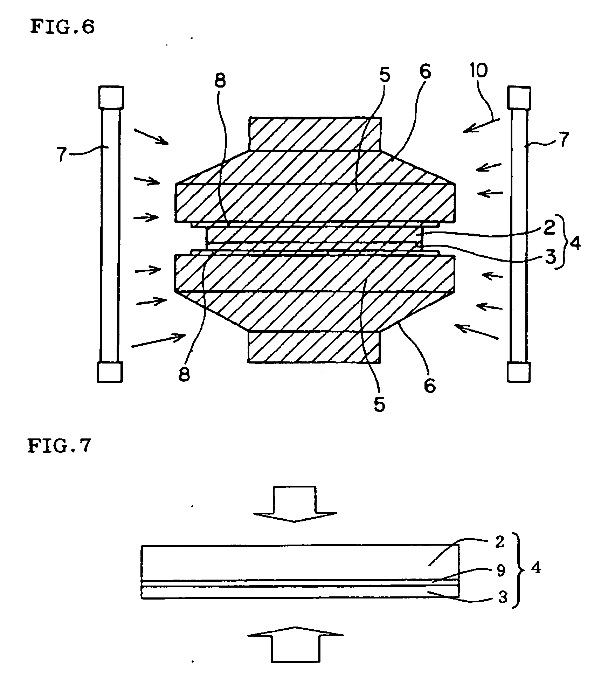

In the method for producing a bonded body of different materials of the present embodiment, after the entire pressing die (5) with good heat transmission has been heated as shown in Fig. 5, the heat is transferred to the plate-member-laminated-body (4) from the holding surface (15) of the heated pressing die (5) as shown in Fig. 6. In this instance, since the pressing dies (5) are heated up to almost even temperature by rapid heating, the heat is uniformly transferred to the surface of the plate-member-laminated-body (4) from the holding surface (15) of the pressing die (5).

The laminated plate-members (2 and 3) can uniformly be heated in this manner, whereby defective bonding can effectively be reduced, and a bonded body of different materials having excellent bonding strength in the bonded interface can be produced.

Since the pressing die (5) is used in the heating step, it is preferable to use a pressing dies (5) made of a material having a melting point of 500°C or more and 1.5 times or more higher than the bonding temperature of plate-members (2 and 3) constituting the plate-member-laminated-body (4). Pressure can sufficiently be applied to the plate-member-laminated-body (4) of the pressing die (5) by using such a pressing die (5). After producing the bonded body of different materials, the pressing die (5) can easily be removed and repeatedly be used. Furthermore, heat deformation of the pressing die (5) in the heating step can be reduced.

The bonding temperature refers to temperature at which the plate members to be bonded are heated and specifically refers to the maximum temperature reached when heated.

Although not specifically limited, the melting point of the pressing die (5) is preferably 1,000°C or more, and more preferably 1,500°C or more. The plate-member-laminated-body can firmly be sandwiched in the heating step by using such a material. The melting point of the pressing die (5) is preferably twice or more higher than that of the aforementioned bonding temperature.

Any material having a heat transfer coefficient (W/m²·K) 1.5 times or more higher than the heat transfer coefficient (W/m²·K) of at least one of the plate members (2 and 3) which form the plate-member-laminated-body is used as the material of the pressing die (5). Materials containing at least one selected from silver, copper, gold, aluminum, magnesium, brass, tungsten, beryllium, iridium, molybdenum, silicon, carbon, aluminum nitride, and silicon carbide are used.

Among these materials, tungsten, molybdenum, carbon, aluminum nitride, and the like are more preferably used. Furthermore, from the viewpoint of availability at a low cost and excellent processability, carbon is particularly preferable.

The heat transfer coefficient of the above-mentioned carbon (e.g. isotropic graphite carbon) significantly varies according to its density. For this reason, when using carbon as a material of the pressing dies in the method for producing a bonded body of different materials of the present embodiment, the density of the carbon is preferably 1.5 Mg/m³ or more, and more preferably 1.7 Mg/m³ or more.

Since carbon with such a density has higher heat transfer properties as compared with materials used for conventional pressing dies and a very high melting point, it can be used in a method for producing bonded bodies of different materials using plate members of various materials.

The pressing die (5) constituted in this way has excellent heat transfer properties and can quickly be heated by the radiant heat (10) of the heater (7) and the like.

In order to ensure uniform heat transfer from the holding surfaces (15) of the pressing dies (5) to the plate-member-laminated-body (4), the plate-member-laminated-body (4) is preferably held in contact with the holding surfaces (15) of the pressing dies (5) without a gap between them.

When the plate-member-laminated-body (4) is held by the pair of pressing dies (5), it is preferable to dispose a releasing material (8) (in Fig. 3, a releasing material (8) in the form of a sheet) between the plate-member-laminated-body (4) and the pair of pressing dies (5) in advance so as not to produce a gap between the pressing dies (5) and the plate-member-laminated-body (4).

This constitution is effective for preventing the plate-member-laminated-body (4) (or the resulting bonded body of different materials (1) (refer to Fig. 2)) from bonding by fusion to the holding surface (15) of the pressing die (5) and for increasing adhesion of the plate-member-laminated-body (4) to the pressing die (5).

Although the releasing material (8) in Fig. 3 has the shape of a sheet, for example, a releasing material in the form of powder (not illustrated) may be used. When such a releasing material in the form of powder is used, the powdered releasing material is spread between the pressing dies and the plate-member laminated body, whereby the powdered releasing material enters into depressions and protrusions on the surface of the pressing dies or the plate-member laminated body, fills the gaps between the pressing dies and the plate-member laminated body, increases heat transmission from the pressing dies, and equalizes the surface pressure distribution.

When a releasing material in the form of a sheet is used, it is preferable that the modulus of elasticity of the releasing material be sufficiently small. Specific modulus of elasticity of the releasing material is preferably 100 GPa or less, and more preferably 10 GPa or less. This configuration makes it possible to fill in the gap between the pressing dies and the plate members, improve the adhesion and heat transfer, and equalize the surface pressure distribution.

The releasing material (8) is preferably a material with excellent heat transmission. Although it is not particularly limited, a releasing material containing at least one material (e.g. sheet-like material or powdery material) selected from the group consisting of silicon, carbon, aluminum nitride, aluminum oxide, and silicon carbide is preferably used.

When the releasing material has the form of a sheet, it is desirable that the thickness be sufficiently small, preferably 1 mm or less, and more preferably 0.2 mm or less. When the releasing material is a powder, it is desirable that the particle diameter be sufficiently small, preferably 0.1 mm or less, and more preferably 0.01 mm or less.

It is possible to improve adhesion of the plate-member-laminated-body (4) with the pressing die (5) and uniformly transfer the heat from the holding surface (15) of the pressing die (5) to the surface of the plate-member-laminated-body (4) by using such a releasing material (8).

When a powder is used as a releasing material, it is preferable to sufficiently press the plate-member-laminated-body and the releasing material using a pair of pressing dies after the powder has been supplied between the pressing dies and the plate-member-laminated-body to fill in the gap between the pressing dies and the plate-member-laminated-body to enhance the heat transfer from the pressing dies, before heating the plate-member-laminated-body.

When the plate-member-laminated-body (4) is sandwiched by a pair of pressing dies (5) in the method for producing a bonded body of different materials of the present embodiment, it is preferable to, for example, press the plate-member-laminated-body (4) under a pressure of 0.1 to 100 MPa by the pressing dies (5) although specific pressure vary according to the form and structures of the plate members (2 and 3) laminated. It is possible to correct warping generated after bonding the plate members (2 and 3) and to obtain a bonded body of different materials (1) without distortion (refer to Fig. 2) by applying pressure in this manner.

As for the material of the two plate members (2 and 3) constituting the plate-member-laminated-body (4) as shown in Fig. 1, a metal or an alloy which can cause at least one phase transformation selected from the group consisting of martensitic transformation, bainite transformation, and pearlite transformation by cooling of the austenite phase is used for one of the plate members (2 and 3) (for example, a plate material 2).

When these metals or alloys are used for one of the plate members (2) of the two plate members (2 and 3), a plate member made of an ultra hard tungsten carbide alloy is used for the other plate member (3).

A bonded body of different materials (1) (refer to Fig. 2) requiring excellent wear resistance only in a part, such as a die used for extrusion forming, is produced by using such two plate members (2 and 3).

When a plate-member-laminated-body (4) is obtained by laminating two plate members (2 and 3) of different materials in the method of the embodiment, it is possible to obtain a plate-member-laminated-body (4) having a brazing material (9) disposed between the two plate-members (2 and 3) by laminating the two plate members (2 and 3) with a brazing material (9) interposed between the two plate-members (2 and 3), for example, as shown in Fig. 7. By employing this constitution, bonding of the two plate members (2 and 3) becomes easy and the bonding strength can be improved in the interface of the two plate members (2 and 3).

Although the brazing material (9) is not particularly limited, a material which can permeate at least one of the two plate-members (2 and 3) is preferably used as the brazing material (9). Such a material does not remain as a layer between the two plate-members (2 and 3) after bonding, thereby preventing a decrease in the mechanical strength due to residual brazing material (9).

As a suitable example of the brazing material (9) used in the method for producing the bonded body of different materials of the present embodiment, at least one brazing material selected from the group consisting of copper, silver, gold, nickel, and aluminum can be given.

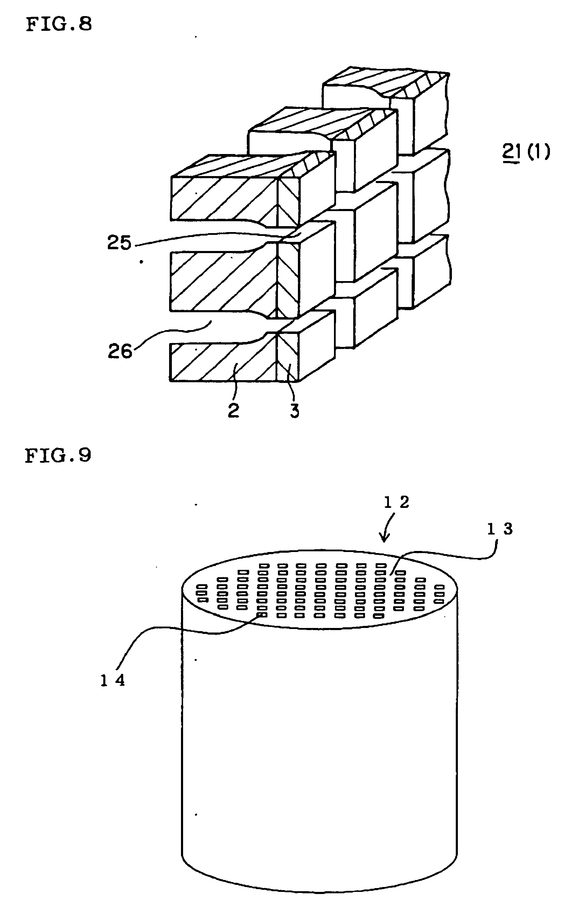

In the method of producing the bonded body of different materials of the present embodiment, it is possible, for example, to produce a die (21) for manufacturing a honeycomb structure as shown in Fig. 8 as a bonded body of different materials by forming back holes to introduce a forming raw material into one of the plate members (2) of the bonded body of different materials and arranging slits for forming a forming raw material into the lattice shape in the other plate member (3).

Such a die (21) is a die (21) made of a bonded body of different materials (1) formed by bonding the plate member (2) having a back hole (26) for introducing a forming raw material and the plate member (3) having slits (25) for forming a forming raw material in the lattice shape.

As shown, for example, in Fig. 9 the die (21) can be used for extrusion-forming a honeycomb structure (12) having porous partition walls (13) and a plural number of cells (14) partitioned and formed by the partition walls (13) and functioning as fluid passages.

The honeycomb structure (12) as shown in Fig. 9 can suitably be used as a catalyst carrier using catalytic action in combustion engines, boilers, chemical reactors, and reformers of fuel cells; and a filter for trapping particulate matter contained in exhaust gas; and the like.

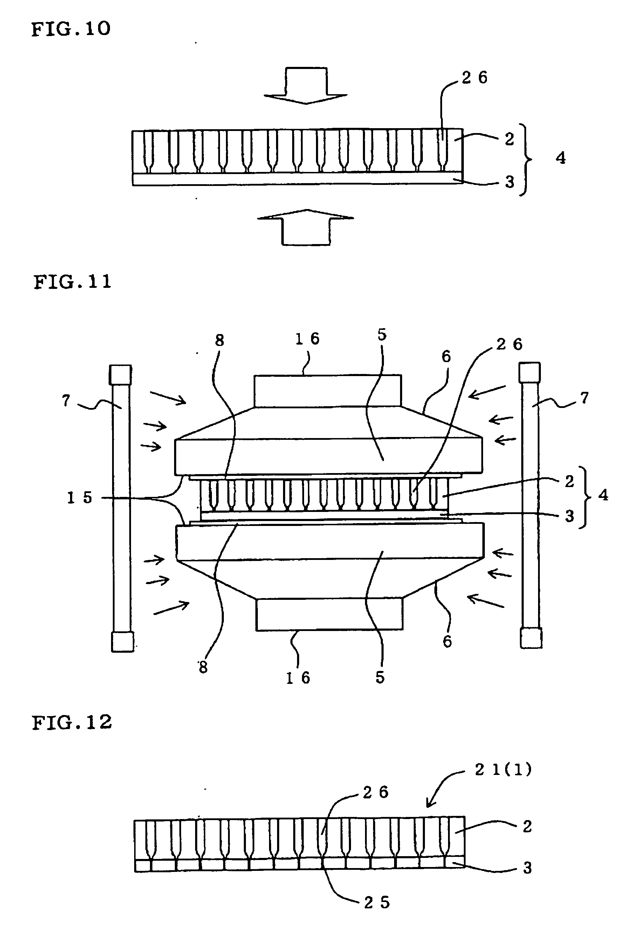

When the die (21) as shown in Fig. 8 is produced, one of the plate member (2) of the two plate members (2 and 3) is provided with back holes (26), and this plate member (2) with back holes is laminated with the other plate member (3) to obtain the plate-member-laminated-body (4), as shown in, for example, Fig. 10.

The above-mentioned back hole (26) can be formed by a known method such as, for example, electro-chemical machining (ECM processing), electrical discharge machining (EDM processing), laser processing, mechanical machining using a drill, and the like.

Next, the resulting plate-member-laminated-body (4) is heated in the state that the resulting plate-member-laminated-body (4) is held between a pair of pressing dies (5) each made of a material containing carbon as the main material and having a tapered part (6) between a holding surface (15) and a fixing end (16), reducing the outer diameter from the holding surface (15) toward the fixing end (16), as shown in Fig. 11 to bond the two plate members (2 and 3) constituting the plate-member-laminated-body (4).

Next, slits (25) for forming a forming raw material in the lattice shape are formed in the other plate member (3) to obtain a die (21) (bonded body of different materials (1)) for forming a honeycomb structure as shown in Fig. 12.

The above-mentioned slits (5) can be formed by a known method such as grinding using a diamond grind stone, electrical discharge machining (EDM processing), or the like.

When such a die (21) is particularly produced, a die (21) having excellent wear resistance can be produced by using a metal or an alloy which can cause at least one phase transformation selected from the group consisting of martensitic transformation, bainite transformation, and pearlite transformation by cooling of an austenite phase as the material for the plate member (2) and a tungsten-carbide hard metal for the other plate member (3).

### INDUSTRIAL APPLICABILITY

A method of producing a bonded body of different materials of the present invention can suitably be used for producing a bonded body of different materials by bonding two plate members, each made of a different material, particularly a bonded body of different materials such as a die used for extrusion forming requiring high wear resistance in only a part thereof.

## Claims

1. A method of producing a bonded body of different materials comprising obtaining a plate-member-laminated-body (4) by laminating two plate members (2, 3) made of respectively different materials, and heating the plate-member-laminated-body (4) to obtain a bonded body of different materials consisting of the two plate members (2, 3) bonded; wherein the material of one (2) of the plate members is a metal or an alloy which can cause at least one phase transformation selected from martensitic transformation, bainite transformation and pearlite transformation by cooling of an austenite phase, and the other plate member (3) is made of an ultra hard tungsten carbide alloy,
**characterized in that** the method includes a step of heating the plate-member-laminated-body (4) in a state that the plate-member-laminated-body is held between a pair of pressing dies (5), which are made of a material having a heat transfer coefficient (W/m²·K) 1.5 times or more higher than the heat transfer coefficient (W/m²·K) of at least one of the plate members (2, 3) constituting the plate-member-laminated-body, the pressing dies (5) having tapered parts (6) between holding surfaces (15) holding the plate-member-laminated-body (4) and fixing ends (16) for securing the pressing dies, the outer diameter of the tapered parts (6) decreasing from the holding surfaces toward the fixing ends, wherein the material of the pressing dies (5) is a material containing at least one of silver, copper, gold, aluminum, magnesium, brass, tungsten, beryllium, iridium, molybdenum, silicon, carbon, aluminum nitride and silicon carbide.

2. The method according to claim 1, wherein the pressing dies (5) are made of a material having a heat transfer coefficient (W/m²·K) 1.5 times or more higher than the heat transfer coefficient (W/m²·K) of both of the plate members (2, 3) constituting the plate-member-laminated-body.

3. The method according to claim 1 or 2, wherein the pressing dies (5) are made of a material having a melting point of 500°C or more and 1.5 times or more higher than the bonding temperature of the plate-members (2, 3) constituting the plate-member-laminated-body.

4. The method according to any one of claims 1 to 3, wherein the two plate members (2, 3) are laminated with a brazing material (9) between them to obtain a plate-member-laminated-body with a brazing material between the two plate members.

5. The method according to any one of claims 1 to 4, wherein the plate-member-laminated-body (4) is held with a releasing material (8) provided in advance between a pair of pressing dies and a plate-member-laminated-body.

6. The method according to claim 5, wherein the releasing material (8) is in a form of a sheet or a powder of at least one material selected from silicon, carbon, aluminum nitride, aluminum oxide, and silicon carbide.

7. The method according to any one of claims 1 to 6, wherein the plate-member-laminated body (4) is held by a pressure of 0.1 to 100 MPa applied by the pressing dies (5).

8. The method according to any one of claims 1 to 7, wherein the material of one of the plate members is provided with a back hole (26) to introduce a forming raw material and slits (23) for forming the forming raw material in a lattice shape, and the resulting bonded body of different materials is suitable to be used as material for a die for forming a honeycomb structure.

## Patentansprüche

1. Verfahren zur Herstellung eines Verbundkörpers aus verschiedenen Materialien, wobei das Verfahren Folgendes umfasst: den Erhalt eines aus Plattenelementen laminierten Körpers (4) durch das Laminieren von zwei Plattenelementen (2, 3), die aus verschiedenen Materialien bestehen, und das Erhitzen des aus Plattenelementen laminierten Körpers (4) zum Erhalt eines Verbundkörpers aus verschiedenen Materialien, der aus den zwei verbundenen Plattenelementen (2, 3) besteht, wobei das Material eines (2) der Plattenelemente ein Metall oder eine Legierung ist, das bzw. die zumindest eine Phasenumwandlung ausgewählt aus martensitischer Umwandlung, bainitischer Umwandlung und perlitischer Umwandlung durch das Abkühlen einer Austenitphase hervorrufen kann, und das andere Plattenelement (3) aus einer ultraharten Wolfram-Carbid-Legierung besteht,
**dadurch gekennzeichnet, dass** das Verfahren einen Schritt umfasst, bei dem der aus Plattenelementen laminierte Körper (4) in einem Zustand erhitzt wird, in dem der aus Plattenelementen laminierte Körper zwischen einem Paar von Pressstempeln (5) gehalten wird, die aus einem Material mit einem Wärmeübertragungskoeffizienten (W/m²·K) gebildet sind, der 1,5-mal oder in höherem Maß höher ist als der Wärmeübertragungskoeffizient (W/m²·K) zumindest eines der Plattenelemente (2, 3), die den aus Plattenelementen laminierten Körper bilden, wobei die Pressstempel (5) zwischen Halteoberflächen (15), die den aus Plattenelementen laminierten Körper (4) halten, und Fixierenden (16) zur Festlegung der Presstempel sich verjüngende Teile (6) aufweisen, wobei der Außendurchmesser der sich verjüngenden Teile (6) von den Halteoberflächen in Richtung der Fixierenden abnimmt, wobei das Material der Presstempel (5) ein Material ist, das zumindest ein aus Silber, Kupfer, Gold, Aluminium, Magnesium, Messing, Wolfram, Beryllium, Iridium, Molybdän, Silicium, Kohlenstoff, Aluminiumnitrid und Siliciumcarbid ausgewähltes Material umfasst.

2. Verfahren nach Anspruch 1, worin die Presstempel (5) aus einem Material bestehen, das einen Wärmeübertragungskoeffizienten (W/m²·K) aufweist, der 1,5-mal oder in höherem Maß höher ist als der Wärmeübertragungskoeffizient (W/m²·K) beider Plattenelemente (2, 3), die den aus Plattenelementen laminierten Körper bilden.

3. Verfahren nach Anspruch 1 oder 2, worin die Presstempel (5) aus einem Material bestehen, das einen Schmelzpunkt von 500 °C oder höher aufweist, der 1,5-mal oder in höherem Maß höher ist als die Verbindungstemperatur der Plattenelemente (2, 3), die den aus Plattenelementen laminierten Körper bilden.

4. Verfahren nach einem der Ansprüche 1 bis 3, worin die beiden Plattenelemente (2, 3) mit einem dazwischen angeordneten Lötmaterial (9) laminiert werden, um einen aus Plattenelementen laminierten Körper zu erhalten, bei dem ein Lötmaterial zwischen den beiden Plattenelementen vorliegt.

5. Verfahren nach einem der Ansprüche 1 bis 4, worin der aus Plattenelementen laminierte Körper (4) mit einem Formtrennmaterial (8) gehalten wird, das vorab zwischen einem Paar Presstempel und dem aus Plattenelementen laminierten Körper bereitgestellt wird.

6. Verfahren nach Anspruch 5, worin das Formtrennmaterial (8) in Form einer Bahn oder eines Pulvers aus zumindest einem aus Silicium, Kohlenstoff, Aluminiumnitrid, Aluminiumoxid und Siliciumcarbid ausgewählten Material vorliegt.

7. Verfahren nach einem der Ansprüche 1 bis 6, worin der aus Plattenelementen laminierte Körper (4) durch einen Druck von 0,1 bis 100 MPa gehalten wird, der durch die Presstempel (5) ausgeübt wird.

8. Verfahren nach einem der Ansprüche 1 bis 7, worin das Material eines der Plattenelemente mit einem rückseitig angeordneten Loch (26), um ein Formrohmaterial einzubringen, und mit Schlitzen (23) bereitgestellt ist, um das Formrohmaterial in Gitterform zu bringen, und worin der resultierende Verbundkörper aus verschiedenen Materialien geeignet ist, um als Material für ein Mundstück zur Ausbildung einer Wabenstruktur eingesetzt zu werden.

## Revendications

1. Procédé de fabrication d'un corps collé de différents matériaux consistant à obtenir un corps stratifié d'éléments de plaque (4) en stratifiant deux éléments de plaque (2, 3) fabriqués à partir de matériaux respectivement différents, et à chauffer le corps stratifié d'éléments de plaque (4) pour obtenir un corps collé de différents matériaux constitué par deux éléments de plaque (2, 3) collés ; dans lequel le matériau d'un (2) des éléments de plaque est un métal ou un alliage qui peut provoquer au moins une transformation de phase choisie entre une transformation martensitique, une transformation bainite ou une transformation perlite par refroidissement d'une phase austénitique, et l'autre élément de plaque (3) est fabriqué à partir d'un alliage de carbure de tungstène ultra dur,
**caractérisé en ce que** le procédé comprend une étape de chauffage du corps stratifié d'éléments de plaque (4) dans un état où le corps stratifié d'éléments de plaque est maintenu entre une paire de matrices de pressage (5), qui sont fabriquées à partir d'un matériau ayant un coefficient de transfert thermique (W/m².K) d'une fois et demie ou plus supérieur au coefficient de transfert thermique (W/m².K) d'au moins un des éléments de plaque (2, 3) constituant le corps stratifié d'éléments de plaque, les matrices de pressage (5) ayant des parties coniques (6) entre les surfaces de maintien (15) maintenant le corps stratifié d'éléments de plaque (4) et les extrémités de fixation (16) pour immobiliser les matrices de pressage, le diamètre externe des parties coniques (6) diminuant depuis les surfaces de maintien vers les extrémités de fixation, dans lequel le matériau des matrices de pressage (5) est un matériau contenant au moins un parmi l'argent, le cuivre, l'or, l'aluminium, le magnésium, le laiton, le tungstène, le béryllium, l'iridium, le molybdène, le silicium, le carbone, le nitrure d'aluminium et le carbure de silicium.

2. Procédé selon la revendication 1, dans lequel les matrices de pressage (5) sont fabriquées à partir d'un matériau ayant un coefficient de transfert thermique (W/m².K) d'une fois et demie ou plus supérieur au coefficient de transfert thermique (W/m².K) des deux éléments de plaque (2, 3) constituant le corps stratifié d'éléments de plaque.

3. Procédé selon la revendication 1 ou 2, dans lequel les matrices de pressage (5) sont fabriquées à partir d'un matériau ayant un point de fusion de 500°C ou plus et d'une fois et demie ou plus supérieur à la température de collage des éléments de plaque (2, 3) constituant le corps stratifié d'éléments de plaque.

4. Procédé selon l'une quelconque des revendications 1 à 3, dans lequel les deux éléments de plaque (2, 3) sont stratifiés avec un matériau d'apport de brasage (9) entre eux pour obtenir un corps stratifié d'éléments de plaque avec un matériau d'apport de brasage entre les deux éléments de plaque.

5. Procédé selon l'une quelconque des revendications 1 à 4, dans lequel le corps stratifié d'éléments de plaque (4) est maintenu à l'aide d'un matériau de séparation (8) disposé à l'avance entre une paire de matrices de pressage et un corps stratifié d'éléments de plaque.

6. Procédé selon la revendication 5, dans lequel le matériau de séparation (8) se présente sous la forme d'une feuille ou d'une poudre d'au moins une substance choisie parmi le silicium, le carbone, le nitrure d'aluminium, l'oxyde d'aluminium et le carbure de silicium.

7. Procédé selon l'une quelconque des revendications 1 à 6, dans lequel le corps stratifié d'éléments de plaque (4) est maintenu grâce à une pression de 0,1 à 100 MPa appliquée par les matrices de pressage (5).

8. Procédé selon l'une quelconque des revendications 1 à 7, dans lequel le matériau d'un des éléments de plaque est doté d'un trou arrière (26) pour introduire une matière première de formage et de fentes (23) pour former la matière première de formage sous forme d'un treillis, et le corps collé obtenu constitué de différents matériaux est adapté à une utilisation en tant que matériau pour une matrice de formage d'une structure en nid d'abeille.
